# EUROPÄISCHE PATENTANMELDUNG

(11) **EP 1 101 404 A1**
(43) Veröffentlichungstag der Anmeldung: **23.05.2001**
(21) Anmeldenummer: 00124859.0
(22) Anmeldetag: 15.11.2000
(51) Int. Cl.: A22C 7/00

(54) **Verfahren und Vorrichtung zur Herstellung von gegarten Fleisch- und Bratenstücken**

(30) Priorität: 19.11.1999 DE 19955628; 10.03.2000 DE 10011762
(71) Anmelder: Averbeck, Wilhelm, 49205 Hasbergen (DE)
(72) Erfinder: Averbeck, Wilhelm, 49205 Hasbergen (DE)

(57) **Zusammenfassung**

Verfahren zur Herstellung von gegarten Fleisch- und Bratenstücken in Behältnissen, welche sich während des Garvorganges an die sich verringernde Größe der Fleisch-und Bratenstücke anpassen können, wobei die Fleisch- und Bratstücke (3) zum Garen in einer länglichen, im wesentlichen geschlossenen, eine über ihre Länge konstante Querschnittsgröße aufweisenden Vorrichtung einfüllbar sind und unter dem Einfluß einer auf jedes Fleisch- und Bratenstück (3) einwirkenden und in Längsrichtung der Vorrichtung gerichteten Haltekraft gegart werden.

## Beschreibung

Die Erfindung betrifft ein Verfahren zur Herstellung von gegarten Fleisch- und Bratenstücken und eine Vorrichtung zur Durchführung des Verfahrens nach dem Oberbegriff des Ansprüche 1,2 und 4. Bei den bisherigen aus dem Stand der Technik bekannten Verfahren/Vorrichtungen ist es vorgesehen, Fleisch- und Bratenstücke zum Garen in Behälter mit einer in etwa rechteckförmigen Grundfläche zu füllen und danach den Behälter mit einem Deckel zu verschließen, der durch Klemmbügel oder dgl. Verschlüsse mit dem Behälter verbunden ist. Dadurch soll es ermöglicht werden, den Behälter zumindest zu Beginn des Garvorganges vollständig mit rohen Fleisch- und Bratenstücken zu füllen. Da beim Garen der Fleisch- und Bratenstücke aber Garverluste auftreten, entstehen in dem Behälter sowohl zwischen den jeweiligen Fleisch- und Bratenstücken als auch zwischen den Fleisch- und Bratenstücken und der Behälterwandung wahllos Hohlräume, so daß eine nach dem Garen sich anschließende, maschinelle Aufteilung der Fleisch- und Bratenstücke mit beispielsweise einer Schneidemaschine mit gleichen Vorschüben, bei der Portionen mit exakt gleich großen Gewichtsanteilen entstehen, nicht mehr erreichbar ist.

Ein weiteres bereits bekanntes Verfahren geht von der Verfüllung der Fleisch- und Bratenstücke in schlauchähnliche Gebilde oder Därme aus, welche mit Löchern versehen sind und deren Herstellungsmaterial ein Nachschrumpfen während des Garvorganges zuläßt. Auch hierbei weisen die Fleisch- und Bratenstücke nach dem Garen keine für eine exakte Portionierung erforderlichen Abmessungen auf, da zum einen der Durchmesser der schlauchähnlichen Gebilde oder Därme je nach Fleischart in unterschiedlichem Maße schrumpft und zum anderen an den Enden durch die Art des Verschlusses (Zubinden) ein mehr oder weniger spitz zulaufender Abschluß entsteht.

Aufgabe der Erfindung ist es daher, ein Verfahren und eine Vorrichtung zur Durchführung des Verfahrens zur Herstellung von gegarten Fleisch- und Bratenstücken zu schaffen, bei dem die Fleisch- und Bratenstücke nach dem Garen unabhängig von der Fleischart normierte Abmessungen aufweisen, so daß eine anschließende Aufteilung der Fleisch- und Bratenstücke in Portionen mit exakt gleich großen Gewichten ermöglicht wird.

Diese Aufgabe wird erfindungsgemäß durch die im kennzeichnenden Teil der Ansprüche 1,2 und 4 aufgeführten Merkmale gelöst. Hinsichtlich der weiteren Ausgestaltung der Erfindung wird auf Anspruch 3, sowie auf die Ansprüche 5 bis 19 verwiesen.

Bei dem nach der Erfindung vorgesehenen Verfahren wird durch das Einfüllen von Fleisch-und Bratenstücken in eine länglich ausgebildete und im wesentlichen geschlossene Vorrichtung mit einer über ihre Länge zumindest annähernd konstanten Querschnittsgröße eine Lösung offenbart, bei der Fleisch- und Bratenstücke schon vor dem Garvorgang in eine Form mit normierten Abmessungen gebracht werden und dann während des Garens unter dem Einfluß einer in Längsrichtung der Vorrichtung gerichteten Haltekraft die normierten Abmessungen beibehalten ohne daß zwischen den jeweiligen Fleisch- und Bratenstücken oder zwischen den Fleisch- und Bratenstücken und einer Wandung der Vorrichtung Hohlräume aufgrund von Garverlusten entstehen. Dabei ist zunächst zwischen zwei Teilverfahren zu unterscheiden, bei denen die Fleisch- und Bratenstücke in der erfindungsgemäßen Vorrichtung entweder direkt aneinander anliegen oder durch Zwischenstücke voneinander getrennt sind. Die Zwischenstücke dienen der Bildung von exakten Anschnittflächen für die anschließende Weiterverarbeitung der Fleisch- und Bratenstücke z.B. der Aufteilung in serviergerechte Portionen. Dazu ist es von besonderer Bedeutung, daß die zwischen zwei benachbarten Fleisch-und Bratenstücken befindlichen Zwischenstücke so ausgerichtet sind, daß eine den Fleisch-und Bratenstücken zugewandte Anlagefläche einen rechten Winkel mit einer sich in Richtung der größten Ausdehnung der Vorrichtung erstreckenden Längsmittelachse bildet. Dadurch wird erreicht, daß die Fleisch- und Bratenstücke die Form eines Zylinders einnehmen und diese auch nach dem Garen bzw. nach dem Herausnehmen aus der Vorrichtung beibehalten, so daß für einen sich dann anschließenden Aufteilungs- und Portionierungsvorgang eine exakte Anschnittfläche der Fleisch- und Bratenstücke vorhanden ist. Dadurch daß die gegarten Fleisch- und Bratenstücke an jeder Stelle vorzugsweise einen gleich großen Querschnitt aufweisen, können nun in vorteilhafter Weise beispielsweise durch einen gleichmäßigen Vorschub an einer Schneidemaschine Portionen mit exakt gleichem Gewichtsanteil hergestellt werden. Desweiteren werden durch die Anwendung des erfindungsgemäßen Verfahrens etwaige beim Portionieren verbleibende und nicht mehr das vorgegebene Gewicht erreichende Reste auf ein Minimum eingeschränkt.

Eine erfindungsgemäße Vorrichtung zur Durchführung der vorstehend offenbarten Verfahren besteht aus einem länglich gestalteten und im wesentlichen geschlossen ausgebildeten Rohrkörper, welcher eine über seine Länge zumindest annähernd konstante Querschnittsgröße aufweist. Grundsätzlich kann dabei die innere Querschnittsfläche des Rohrkörpers von einer beliebigen geometrischen Kontur begrenzt sein, wobei vorzugsweise von einer kreisförmig gestalteten Querschnittsfläche ausgegangen wird. In diesem Rohrkörper können zwischen den Fleisch- und Bratenstücken Zwischenstücke vorgesehen, die so ausgeführt sind, daß sie sich zum einen ungehindert zum Ausgleich von Garverlusten in Richtung einer Längsmittelachse des Rohrkörpers bewegen können und zum anderen dabei immer eine rechtwinkelig zur Längsmittelachse des Rohrkörpers ausgerichtete Lage beibehalten. Dazu ist es erforderlich, die Dicke der Zwischenstücke so zu gestalten, daß ein Verkannten in dem Rohrkörper sicher ausgeschlossen ist.

Nach einem weiteren vorteilhaften Aspekt der Erfindung ist es vorgesehen, daß die Fleisch-und Bratenstücke in dem Rohrkörper während des Garens unter dem Einfluß einer in Richtung der Längsmittelachse des Rohrkörpers wirksamen Haltekraft stehen, welche auf ein oder mehrere Zwischenstücke und/oder Endstücke einwirkt. Dadurch wird auf die in dem Rohrkörper befindlichen Fleisch- und Bratenstücke ein Druck ausgeübt, durch den erfindungsgemäß sichergestellt wird, daß sich infolge von Garverlusten keine Hohlräume zwischen den Fleisch- und Bratenstücken und den Zwischen- und/oder Endstücken oder zwischen den Fleisch- und Bratenstücken und einer Wandung des Rohrkörpers bilden, so daß nach dem Garvorgang dem Rohrkörper Fleisch- und Bratenstücke entnommen werden können, welche sich zum einen durch einen köstlichen Geschmack und zum anderen durch eine exakt zylinderförmig ausgebildete Form auszeichnen. Um jedes Fleisch- und Bratenstück mit einem zumindest in etwa gleich großen Druck beaufschlagen zu können, sieht die Erfindung in einer vorteilhaften Ausgestaltung eine vertikale Ausrichtung des Rohrkörpers während des Garvorganges vor. Das bedeutet, daß ein am oberen Ende des Rohrkörpers zum Aufbringen der Haltekraft vorgesehener Kraftspeicher durch den Einfluß der Gewichtskraft der Fleisch- und Bratenstücke unterstützt wird . In einer vorteilhaften Weiterbildung der Erfindung kann es aber auch sein, daß beispielsweise an beiden Enden des Rohrkörpers ein Kraftspeicher eingesetzt ist. Es ist aber auch denkbar, zwischen benachbarten Zwischenstücken im mittleren Bereich des Rohrkörpers einen Kraftspeicher vorzusehen.

Ein konstruktiv einfache Ausführungsform eines Kraftspeichers geht von einer aus einem temperaturbeständigen und lebensmittelverträglichen Werkstoff bestehenden Druckfeder aus, wobei die Größe der Haltekraft beispielsweise durch Beilage von beispielsweise Unterlegscheiben einstellbar ist.

Um eine in der Handhabung einfache und den im Lebensmittelbereich notwendigen hohen hygienischen Anforderungen gerechtwerdende Vorrichtung zur Herstellung von gegarten Fleisch- und Bratenstücken bereitstellen zu können, ist der Rohrkörper an beiden Enden über Endstücke verschließbar ausgebildet, wobei die Endstücke beispielsweise durch Steckbolzen in der Verschlußstellung gesichert sind. Dadurch kann nach dem Garvorgang und nach einem Entfernen der Endstücke in einer einfachen Art und Weise eine Reinigung des Rohrkörpers vorgenommen werden. Zur zuverlässigen Abführung der beim Garvorgang der Fleisch- und Bratenstücke austretenden und den Garverlust ausmachenden Flüssigkeit sind auf der Mantelfläche Bohrungen angebracht, welche gleichmäßig verteilt auf der Mantelfläche angeordnet sind und deren Größe der jeweiligen Fleischart angepaßt ist.

Eine detaillierte Beschreibung des Gegenstandes der Erfindung erfolgt nun anhand von einem in einer Zeichnung dargestellten Ausführungsbeispiel. In der Zeichnung stellt im einzelnen dar:

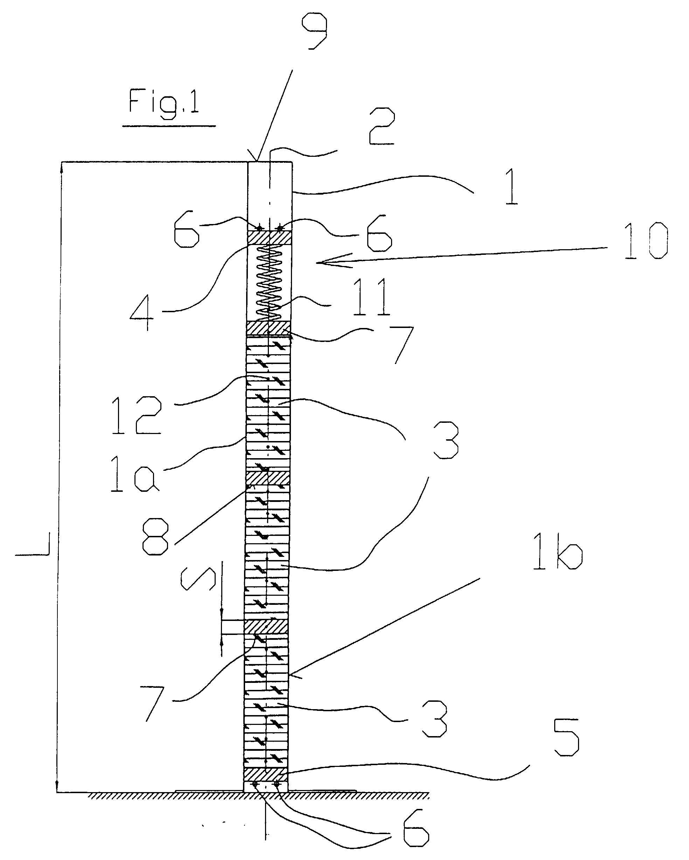

Fig. 1 eine Schnittdarstellung einer Vorrichtung zur Herstellung von gegarten Fleisch- und Bratenstücken nach der Erfindung;

Eine vorteilhafte Ausführungsform der Erfindung ist in Fig. 1 näher veranschaulicht und umfaßt im wesentlichen einen Rohrkörper 1 mit einer Längsmittelachse 2, welche sich in vertikaler Richtung erstreckt. Im unteren Bereich des Rohrkörpers 1 befindet sich eine Bodenplatte 3, die fest, beispielsweise durch eine Schweißverbindung mit dem Rohrkörper 1 verbunden ist und somit eine Aufstandfläche bildet. Bei der in der Fig. 1 veranschaulichten Anordnung des Rohrkörpers 1 handelt es sich um eine Stellung, welche sowohl beim Befüllen des Rohrkörpers 1 mit Fleisch- und Bratenstücken 3 als auch beim Garen vorzugsweise zur Anwendung kommt. Hinsichtlich der Fleisch- und Bratenstücke 3 ist die Erfindung nicht auf eine bestimmte Fleischart beschränkt. Vielmehr gehört es zum Wesen der Erfindung, daß Fleisch- und Bratenstücke jeglicher Fleischart in dem erfindungsgemäß gestalteten Rohrkörper 1 gegart werden können.

Wie aus der Fig. 1 weiterhin hervorgeht, sind zum Verschließen des Rohrkörpers 1 Endstücke 4,5 vorgesehen, welche in einer konstruktiv einfachen und somit kostengünstigen Art und Weise durch Steckbolzen 6 in ihrer vorgesehen Position gehalten werden. Gemäß einem für das Wesen der Erfindung sehr bedeutenden Merkmal befinden sich zwischen jedem Fleisch und Bratenstück 3 Zwischenstücke 7, welche so gestaltet sind, daß ihre den Fleisch- und Bratenstücken 3 zugewandten Querschnittsflächen 8 jederzeit rechtwinkelig zur Längsmittelachse 2 ausgerichtet sind. Dabei ist die Größe der Querschnittsflächen 8 in Bezug zu einer Querschnittsfläche 9 so gewählt, daß eine ungehinderte Bewegung der Zwischenstücke 7 in Richtung der Längsmittelachse 2 zum Ausgleich von Garverlusten stattfinden kann. Bezüglich der rechtwinkeligen Ausrichtung der Zwischenstücke 7 in dem Rohrkörper 1 ist es weiterhin von besonderer Bedeutung, daß die Zwischenstücke 7 eine Dicke S aufweisen, bei der ein Verkannten der Zwischenstücke 7 in dem Rohrkörper 1 sicher ausgeschlossen werden kann. Eine vorteilhafte Ausführungsform kann beispielsweise einen Rohrkörper 1 mit einer kreisförmig ausgebildeten Querschnittsfläche 9 aufweisen, wobei der Durchmesser in einem Bereich von 100 mm liegt und die Zwischenstücke 7 eine Dicke von etwa 30 mm haben. Gemäß vorteilhafter Weiterbildungen der Erfindung kann die Querschnittsfläche 9 des Rohrkörpers 1 und damit natürlich auch die Querschnittsfläche 8 der Zwischenstücke 7 von einer beliebig geformten geometrischen Kontur begrenzt sein. Als eines von vielen denkbaren Beispielen sei hier eine herzförmig ausgebildete Kontur erwähnt. Hinsichtlich der Länge L des Rohrkörpers 1 ist noch zu erwähnen, daß diese Größe so gewählt werden kann, wie es die für das Garen zur Verfügung stehenden Räumlichkeiten zulassen. Die in Fig. 1 getroffene Auswahl mit drei in den Rohrkörper 1 eingefüllten Fleisch- und Bratenstücken 3 stellt dabei eine willkürliche gewählte Ausführungsform da.

In Weiterbildung der Erfindung und wie aus Fig. 1 ebenfalls ersichtlich, ist es vorgesehen, daß die Fleisch- und Bratenstücke 3 während des Garens in dem Rohrkörper 1 unter dem Einfluß einer Haltekraft stehen. Nach der Erfindung ist dazu zumindest ein Kraftspeicher 10 notwendig, welcher in einer denkbaren Ausführungsform als Druckfeder 11 ausgebildet ist und aus einem temperaturbeständigen und lebensmittelverträglichen Werkstoff besteht. Durch den Kraftspeicher 10 wird erfindungsgemäß sichergestellt, daß beim Garen der Fleisch- und Bratenstücke 3 in dem Rohrkörper 1 infolge nicht zu vermeidender Garverluste sowohl zwischen den Fleisch- und Bratenstücken 3 und den Zwischenstücken 7 als auch zwischen den Fleisch-und Bratenstücken 3 und einer Wandung 1a des Rohrkörpers 1 keine Hohlräume entstehen. Die Ausnutzung dieses Effektes ermöglicht es, daß nach dem Garvorgang Fleisch- und Bratenstücke 3 aus dem Rohrkörper 1 entnehmbar sind, welche exakt die Form eines einen beliebigen Querschnitt aufweisenden Zylinders mit rechtwinkelig zu einer gedachten Längsachse ausgerichteten Anschnittflächen aufweisen. Unter diesen idealen Voraussetzungen kann nun eine maschinell ausgeführte Aufteilung der Fleisch- und Bratenstücke 3 in Scheiben bzw. Portionen mit exakt gleich großen Gewichtsanteilen erfolgen, indem an der Schneidemaschine beispielsweise ein einheitlicher Vorschub eingestellt wird. Zur Anpassung an unterschiedliche Fleischarten kann die Haltekraft des als Druckfeder 11 ausgeführten Kraftspeichers 10 beispielsweise durch die Beilage von Unterlegscheiben verändert werden. Wie aus Fig.1 hervorgeht, ist die Druckfeder 11 zwischen einem Zwischenstück 7 und einem Endstück 4 im oberen Bereich des Rohrkörpers 1 angeordnet. In weiteren vorstellbaren Ausführungsformen kann es aber auch vorgesehen sein, daß die Druckfeder 11 zwischen zwei Zwischenstücke 7 eingesetzt ist. Weiterhin ist es auch denkbar, in einem Rohrkörper 1 mehrere Kraftspeicher 10 bzw. Druckfedern 11 einzusetzen.

Um eine störungsfreie und eine für einen optimalen Garvorgang der Fleisch- und Bratenstükke 3 unerläßliche Abführung der hauptsächlich den Garverlust ausmachenden Flüssigkeit sicherstellen zu können, sind in der Wandung 1a des Rohrkörpers 1 Bohrungen 12 angebracht, welche auf der Mantelfläche 1b eine regelmäßige Verteilung aufweisen. Hinsichtlich der Größe der Bohrungen 12 und ihrer Anzahl sei noch erwähnt, daß diese im wesentlich von der zu verarbeitenden Fleischart abhängig sind.

Obwohl in der vorstehenden Beschreibung eine vorteilhafte Ausführungsform offenbart ist, so sind im Rahmen der Erfindung durchaus weitere Modifikationen vorstellbar. So ist es beispielsweise ebenso denkbar, den Rohrkörper 1 in einer horizontal ausgerichteten Stellung in einem Ofen oder dergleichen Gareinrichtungen zu positionieren.

## Patentansprüche

1. Verfahren zur Herstellung von gegarten Fleisch- und Bratenstücken in Behältnissen, welche sich während des Garvorganges an die sich verringernde Größe der Fleisch- und Bratenstücke anpassen können, **dadurch gekennzeichnet,** daß Fleisch- und Bratstücke (3) zum Garen in einer länglichen, im wesentlichen geschlossenen, eine über ihre Länge zumindest annähernd konstante Querschnittsgröße aufweisenden Vorrichtung einfüllbar sind und unter dem Einfluß einer auf jedes Fleisch- und Bratenstück (3) einwirkenden, in Längsrichtung der Vorrichtung gerichteten Haltekraft gegart werden.

2. Verfahren zur Herstellung von gegarten Fleisch- und Bratenstücken in Behältnissen, welche sich während des Garvorganges an die sich verringernde Größe der Fleisch-und Bratenstücke anpassen können, **dadurch gekennzeichnet,** daß die Fleisch- und Bratstücke (3) zum Garen in einer länglichen, im wesentlichen geschlossenen, eine über ihre Länge zumindest annähernd konstante Querschnittsgröße aufweisenden und zwischen zumindest zwei der eingefüllten Fleisch- und Bratenstücke (3) mit einem Zwischenstück (7) versehenen Vorrichtung einfüllbar sind und unter dem Einfluß einer auf jedes Fleisch- und Bratenstück (3) einwirkenden, in Längsrichtung der Vorrichtung gerichteten Haltekraft gegart werden.

3. Verfahren zur Herstellung von gegarten Fleisch- und Bratenstücken nach Anspruch 2, **dadurch gekennzeichnet,** daß die Fleisch- und Bratstücke (3) zum Garen in einer länglichen, im wesentlichen geschlossenen, eine über ihre Länge zumindest annähernd konstante Querschnittsgröße aufweisenden und zwischen jedem Fleisch- und Bratenstück (3) mit einem rechtwinklig zu einer Längsmittelachse (2) ausgerichteten Zwischenstück (7) versehenen Vorrichtung einfüllbar sind und unter dem Einfluß einer auf jedes Fleisch- und Bratenstück (3) einwirkenden, in Längsrichtung der Vorrichtung gerichteten Haltekraft gegart werden.

4. Vorrichtung zur Durchführung des Verfahrens nach einem der Ansprüche 1 bis 3, **dadurch gekennzeichnet,** daß diese einen länglich gestalteten Rohrkörper (1) mit rechtwinklig zu einer Längsmittelachse (2) ausgerichteten Endstücken (4,5) umfaßt, der eine über die Länge (L) zumindest annähernd konstante Querschnittsgröße aufweist.

5. Vorrichtung zur Durchführung des Verfahrens nach einem der Ansprüche 1 bis 4, **dadurch gekennzeichnet,** daß in dem Rohrkörper (1) zwischen zumindest zwei der eingefüllten Fleisch- und Bratenstücke (3) ein Zwischenstück (7) vorgesehen ist.

6. Vorrichtung zur Durchführung des Verfahrens nach einem der Ansprüche 1 bis 5, **dadurch gekennzeichnet,** daß in dem Rohrkörper (1) zwischen jedem Fleisch- und Bratenstück (3) ein Zwischenstück (7) vorgesehen ist.

7. Vorrichtung zur Durchführung des Verfahrens nach einem der Ansprüche 1 bis 6, **dadurch gekennzeichnet,** daß die innere Querschnittsfläche (9) des Rohrkörpers (1) von einer beliebigen geometrischen Kontur begrenzt ist.

8. Vorrichtung zur Durchführung des Verfahrens nach einem der Ansprüche 1 bis 6, **dadurch gekennzeichnet,** daß die innere Querschnittsfläche (9) des Rohrkörpers (1) kreisförmig ausgebildet ist.

9. Vorrichtung zur Durchführung des Verfahrens nach einem der Ansprüche 1 bis 8, **dadurch gekennzeichnet,** daß der Rohrkörper (1) beim Garen von Fleisch- und Bratenstücken (3) vertikal ausgerichtet ist.

10. Vorrichtung zur Durchführung des Verfahrens nach einem der Ansprüche 1 bis 9, **dadurch gekennzeichnet,** daß auf der Mantelfläche (1b) des Rohrkörpers (1) in einer regelmäßigen Verteilung Bohrungen (12) angebracht sind.

11. Vorrichtung zur Durchführung des Verfahrens nach einem der Ansprüche 1 bis 10, **dadurch gekennzeichnet,** daß die Zwischenstücke (7) so gestaltet sind, daß diese im in den Rohrkörper (1) eingesetzten Zustand stets eine zur Längsmittelachse (2) rechtwinkelig ausgerichtete Lage einnehmen.

12. Vorrichtung zur Durchführung des Verfahrens nach einem der Ansprüche 1 bis 11, **dadurch gekennzeichnet,** daß die Dicke (S) und die Querschnittsfläche (8) der Zwischenstücke (7) in Bezug zur inneren Querschnittsfläche (9) des Rohrkörpers (1) so ausgebildet ist, daß eine ungehinderte, einen Garverlust ausgleichende Bewegung der Zwischenstücke (7) in Richtung der Längsmittelachse (2) möglich ist.

13. Vorrichtung zur Durchführung des Verfahrens nach einem der Ansprüche 1 bis 12, **dadurch gekennzeichnet,** daß zum Aufbringen der Haltekraft ein Kraftspeicher (10) vorgesehen ist.

14. Vorrichtung zur Durchführung des Verfahrens nach einem der Ansprüche 1 bis 13, **dadurch gekennzeichnet,** daß zum Aufbringen der Haltekraft ein Kraftspeicher (10) vorgesehen ist, welcher innerhalb des Rohrkörpers (1) zwischen einem Zwischenstück (7) und einem Endstück (4,5) angeordnet ist.

15. Vorrichtung zur Durchführung des Verfahrens nach einem der Ansprüche 1 bis 13, **dadurch gekennzeichnet,** daß der Kraftspeicher (10) zwischen zwei Zwischenstücken (7) angebracht ist.

16. Vorrichtung zur Durchführung des Verfahrens nach einem der Ansprüche 1 bis 15, **dadurch gekennzeichnet,** daß zur Aufbringung der Haltekraft in dem Rohrkörper (1) mehrere auf der Länge (L) verteilt angeordnete Kraftspeicher (10) vorhanden sind.

17. Vorrichtung zur Durchführung des Verfahrens nach einem der Ansprüche 1 bis 16, **dadurch gekennzeichnet,** daß der/die Kraftspeicher (10) als eine aus einem temperaturbeständigen Material hergestellte Druckfeder (11) ausgeführt ist/sind.

18. Vorrichtung zur Durchführung des Verfahrens nach einem der Ansprüche 1 bis 17, **dadurch gekennzeichnet,** daß die Größe der Haltekraft der Kraftspeicher (10) veränderbar ist.
